# EUROPÄISCHE PATENTANMELDUNG

(11) **EP 0 685 248 A1**
(43) Veröffentlichungstag der Anmeldung: **06.12.1995**
(21) Anmeldenummer: 95810298.0
(22) Anmeldetag: 04.05.1995
(51) Int. Cl.: B01D 3/10, B01D 3/42, B01D 5/00

(54) **Verfahren und Vorrichtung zum Destillieren von Flüssigkeiten**

(30) Priorität: 03.06.1994 CH 1753/94
(71) Anmelder: Büchi Labortechnik AG, CH-9230 Flawil (CH)
(72) Erfinder: Talamona, Angelo, CH-9230 Flawil (CH)
(74) Vertreter: Hepp, Dieter

(57) **Zusammenfassung**

Die Gesamtanordnung (6) aus Destillationsgefäss (3), Kondensator (4) und Sammelgefäss (5) einer Destillationsvorrichtung (1) ist mit einem Hahn (14) gegenüber der Umgebungsluft abschliessbar. Die Gesamtanordnung (6) lässt sich mittels einer Vakuumpumpe (13) evakuieren. Nach Absenkung des Innendrucks in der Gesamtanordnung wird eine zu destillierende Flüssigkeit im Destillationsgefäss (3) destilliert, wobei Wärmeenergie zugeführt wird. Der Dampf kondensiert im Kondensator (4) und wird im Sammelgefäss aufgefangen.

## Beschreibung

Die Erfindung betrifft ein Verfahren zum Destillieren von Flüssigkeiten, insbesondere Lösungsmitteln. Bei derartigen Verfahren kommt ein Destillationsgefäss zum Einsatz, dessen Auslassöffnung mit einem Kondensator verbunden ist und wobei wenigstens ein Sammelgefäss zum Aufnehmen des Kondensats verbunden ist.

Vor allem für Laboranwendungen sind zur Destillation überwiegend Rotationsverdampfer im Einsatz, bei welchen die Gesamtanordnung aus Destillationsgefäss, Kondensator und Sammelgefäss laufend oder zumindest periodisch während des Destillationsvorgangs durch eine Vakuumpumpe evakuiert wird, um den Verdampfungspunkt zu senken. Die Steuerung oder Regelung des Destillationsverfahrens erfolgt bei Rotationsverdampfern gewöhnlich durch Regelung des Drucks, d. h. also des Vakuums oder Teilvakuums in der Gesamtanordnung bei weitgehend konstant gehaltener Temperatur. Ein derartiges Verfahren bzw. ein derartiger Rotationsverdampfer ist aus der DE-37 18 791 Al bekannt.

Ein Problem derartiger bekannter Destillationseinrichtungen ist vor allem darin zu sehen, dass während des gesamten Ablaufs der Destillation eine Vakuumpumpe in Betrieb sein muss, um den Unterdruck auf dem gewünschten Niveau zu halten. Vor allem bei Rotationsverdampfern treten aufgrund der Rotationsbewegung des Destillationskolbens häufig Leckverluste auf, die entsprechende Pumpenleistung nach sich ziehen.

Werden Lösungsmittel destiliert, so können diese durch die Vakuumpumpe austreten und Verunreinigungen verursachen oder das Bedienungspersonal gefährden. Es wurde zwar bereits in der CH-PS-681 279 vorgeschlagen, eine Abgasüberwachungseinrichtung vorzusehen. Dies ist einerseits mit erheblichem Aufwand verbunden. Andererseits ist bei bekannten Destillationsverfahren auch die Destillationsgeschwindigkeit beschränkt.

Der Erfindung liegt die Aufgabe zugrunde ein Verfahren und eine Vorrichtung zum Destillieren von Flüssigkeiten, insbesondere von Lösungsmitteln zu schaffen, das bei geringstem apparativen Aufwand Umweltemissionen minimiert und Destillationsleistung optimiert.

Erfindungsgemäss wird diese Aufgabe in erster Linie gemäss Kennzeichen der Patentansprüche gelöst.

In Abkehr vom Stand der Technik wird die Destillation dabei in einem geschlossenen System durchgeführt, d. h. dass die Gesamtanordnung aus Destillationsgefäss, Kondensator und Sammelgefäss während des Destillationsverfahrens im wesentlichen geschlossen bleibt und vor allem nicht mehr laufend oder periodisch durch eine Vakuumpumpe evakuiert wird. Vielmehr wird der Druck in der Gesamtanordnung vor Beginn der Destillation abgesenkt und die Gesamtanordnung geschlossen. Damit erübrigt sich auch eine Druckregelung, weil sich im System selbsttätig ein Gleichgewicht zwischen Verdampfungs- und Kondensationsrate einstellt. Wird nämlich im Destillationsgefäss mehr Lösungsmittel verdampft, als im Kondensator kondensiert werden kann, so steigt der Systemdruck in der Apparatur um einige Millibar an. Wurde z. B. die Gesamtanordnung vor Beginn der Destillation auf 1 bis 5 Millibar abgesenkt, so kann sich - je nach Lösungsmittel - der Druck während der Destillation z. B. auf 700 Millibar einstellen. Wenn nun der Systemdruck über 700 Millibar ansteigt, steigt damit gleichzeitig der Siedepunkt des Lösungsmittels im Destillationsgefäss. Bei konstanter Temperatur der Heizquelle bedeutet dies, dass die Verdampfungsrate unmittelbar absinken würde. Damit stabilisiert sich die Destillation in einem weiten "Regelbereich" selbsttätig und es ergibt sich ein Gleichgewichtszustand. Da die Vakuumpumpe im Betrieb nicht benötigt wird, und die Gesamtanordnung effektiv geschlossen bleibt, verläuft die gesamte Destillationsphase vollständig emissionsfrei.

Die zur Destillation erforderliche Wärmeenergie kann z. B. durch ein Wasserbad mit einer Heizanordnung dem Destillationsgefäss zugeführt werden. Selbstverständlich sind auch beliebige andere Formen der Uebertragung von Wärmeenergie auf das Destillat denkbar. Z. B. kann eine Heizplatte, eine Wärmeerzeugung durch Microwellen, Wärmeerzeugung durch eine Wärmepumpe, die z. B. Energie vom Kondensator entzieht, Strahlungsheizung etc. eingesetzt werden.

Der Kondensator kann z. B. durch Kühlwasser, durch ein Kühlaggregat oder auch durch Kühlluft gekühlt werden. Besonders bewährt hat sich im Rahmen der Erfindung der Einsatz eines geschlossenen Kühlsystems, bei dem das durch den Kondensator geführte Kühlmedium in einem Kühler abgekühlt und sodann wieder dem Kondensator zugeführt wird. Kühler lassen sich besonders einfach aufbauen und betreiben, wenn eine Luftkühlung vorgesehen ist, bei welcher mittels eines Ventilators dem im Kühler zirkulierenden Kühlmedium Wärme entzogen wird.

Das erfindungsgemässe Destillationsverfahren regelt sich in einem weiten Bereich selbst, so dass sich ein Gleichgewicht zwischen Verdampfungsrate im Destillationsgefäss und Kondensationsrate im Kühler einstellt. Wenn die Sicherheit des Systems gegen Fehlbedienung weiter optimiert werden soll, wird erfindungsgemäss vorgeschlagen, den Innendruck in der Gesamtanordnung laufend zu überwachen und mit wenigstens einem Sollwert zu vergleichen. Bei einem positiven Abweichen, d. h. also wenn der Druck im System höher ist, als der Sollwert, kann die Wärmezufuhr zum Destillat reduziert werden, womit der Druck absinkt. Alternativ oder gleichzeitig kann auch die Leistung des Kühlers erhöht werden, wodurch ebenfalls der Innendruck im System gesenkt wird. Andererseits kann bei einem negativen Vergleichswert, d. h. also wenn der Innendruck im System geringer ist als der Sollwert, die Wärmezufuhr und damit die Verdampfungsrate erhöht werden. Alternativ lässt sich auch die Verdampfungsrate und die Wärmezufuhr konstant halten, und es kann die Kondensationsleistung im Kondensator durch Erhöhung der Kühltemperatur gesenkt werden. Selbstverständlich lassen sich auch beide Massnahmen gleichzeitig treffen, um die Reaktionszeit des Systems zu reduzieren.

Schliesslich kann auch überwacht werden, ob der Innendruck im System sich in einer Weise an den Aussendruck annähert, dass das Entstehen eines Ueberdrucks zu befürchten ist. In diesem Fall kann z. B. die Heizung abgeschaltet und/oder die Kondensatorleistung erhöht und/oder ein Sicherheitsventil geöffnet werden, um ein Bersten des Systems zuverlässig zu verhindern.

Nach dem Abschluss des Destillationsvorgangs kann das System belüftet werden und anschliessend kann das im Sammelgefäss angesammelte Kondensat in ein Auffanggefäss geleitet werden. Alternativ ist es auch denkbar, Auffanggefässe in die Gesamtanordnung einzubeziehen, d. h. zu evakuieren, die Verbindungsleitung zwischen Sammelgefäss und Auffanggefäss zu schliessen, so dass der Unterdruck im System erhalten bleibt und danach das Auffanggefäss zu entfernen. Auf diese Weise kann z. B. mit einer Mehrzahl von Auffanggefässen sequentiell gearbeitet werden, ohne dass das System belüftet werden muss.

Zum Zuführen von Flüssigkeiten in den Destillationsbehältern kann ähnlich vorgegangen werden: einerseits ist es möglich, nach dem Evakuieren durch eine Zufuhrleitung die zu destillierende Flüssigkeit einzusaugen. Dabei muss sorgfältig darauf geachtet werden, dass keine Luft zugeführt wird. Es können aber auch Zufuhrbehälter im System integriert werden, so dass z. B. nur durch Oeffnung eines Hahns ein Zufuhrbehälter oder mehrere Zufuhrbehälter mit dem Destillationsgefäss verbunden werden können.

Die Erfindung ist im folgenden in Ausführungsbeispielen anhand der Zeichnungen näher erläutert. Es zeigen:
- Figur 1: die schematische Darstellung einer Destillationsvorrichtung mit den Merkmalen der Erfindung,
- Figur 2: ein abgewandeltes Ausführungsbeispiel einer Destillationsvorrichtung oder einer erfindungsgemässen Destillationsvorrichtung,
- Figur 3: die Darstellung modifizierter Sammelgefässe für das Kondensat,
- Figur 4: die Anordnung von Zufuhrbehältern,
- Figur 5: die schematische Darstellung des Druckverlaufs und des Temperaturverlaufs bei einem Destillationsverfahren,
- Figur 6 und 7: weiter abgewandelte Ausführungsbeispiele einer Destillationsvorrichtung mit Regelung.

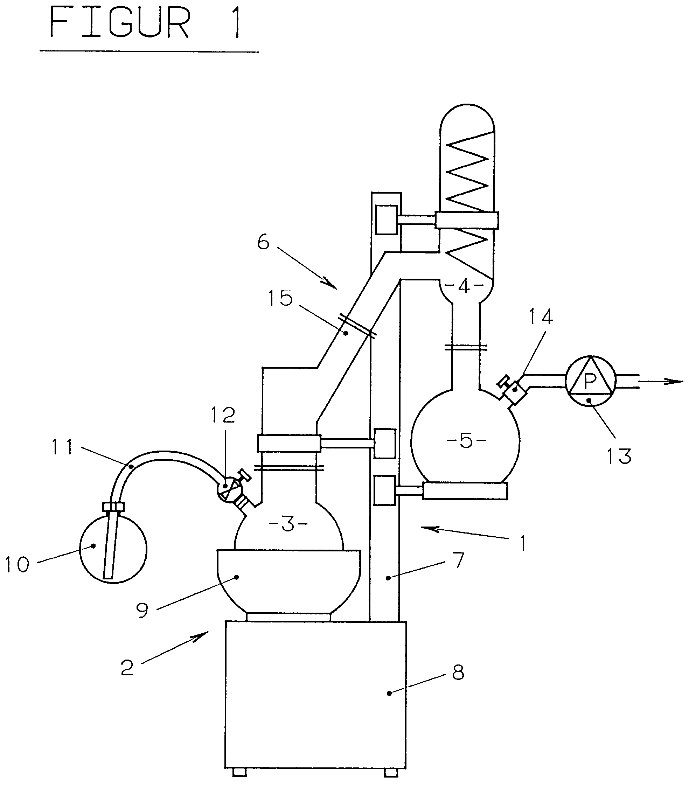

Gemäss Figur 1 weist eine Destillationsvorrichtung 1 eine Heizeinrichtung 2, ein Destillationsgefäss 3, einen Kondensator 4 und ein Sammelgefäss 5 auf. Die Gesamtanordnung 6 aus Destillationsgefäss 3, Kondensator 4 und Sammelgefäss 5 ist an einem Stativ 7 befestigt, das mit einem Sockel 8 verbunden ist. Im Sockel 8 ist eine nicht dargestellte Stromversorgungseinrichtung zum Speisen einer Heizplatte angeordnet, durch die ein mit Wasser gefülltes Heizbad 9 erwärmt wird.

Mit dem Destilliergefäss 3 ist ein Zufuhr-Behälter über eine Leitung 11 verbunden, in der ein Hahn 12 angeordnet ist.

Im Betrieb wird zunächst eine Vakuumpumpe 13 betätigt und ein Hahn 14 am Sammelgefäss 5 betätigt, um die durch Rohr-Leitungen 15 verbundene lösungsmittelfreie Gesamtanordnung 6 zu evakuieren. Wenn das Vakuum in der Gesamtanordnung 6 einen Wert von etwa einem mbar, jedenfalls weniger als fünf mbar erreicht hat, wird der Hahn 14 geschlossen und durch Oeffnen des Hahns 12 die zu destillierende Flüssigkeit aus dem Behälter 10 in das Destillationsgefäss 3 eingesaugt. Dabei ist darauf zu achten, dass aus dem Behälter 10 keine Luft sondern ausschliesslich die zu destillierende Flüssigkeit angesaugt wird.

Das Heizbad 9 ist beim Einlassen der zu destillierenden Flüssigkeit in das Destillationsgefäss 3 bereits auf eine der Siedetemperatur des Lösungsmittels entsprechende Temperatur erwärmt. Damit setzt unmittelbar nach dem Einlassen der Flüssigkeit die Destillation ein. Dabei stellt sich selbsttätig ein Gleichgewicht zwischen der Verdampfungsrate im Destillationsgefäss 3 und der Kondensationsrate im Kondensator 4 ein. Am Anfang, d. h. unmittelbar nach dem Einlassen der Flüssigkeit wird zunächst Flüssigkeit verdampft, der Flüssigkeitsdampf steigt im Destillationsgefäss auf und füllt die Rohr-Leitung 15 bis zum Kondensator 4. Damit steigt der Druck im System an, wobei immer noch ein Unterdruck, verglichen mit dem Aussendruck, herrscht. Je nach Lösungsmittel beträgt der Unterdruck beim Einsetzen der Kondensation etwa zwischen ca. 100 mbar und 900 mbar. Nach dem Einsetzen der Kondensation stellt sich das Gleichgewicht zwischen Verdampfungsrate und Kondensationsrate selbsttätig ein: im Kondensator 4 wird Lösungsmittel kondensiert. Dadurch sinkt der Innendruck wieder ab. Dadurch sinkt aber gleichzeitig der Siedepunkt des Lösungsmittels, was bei konstanter Badtemperatur unmittelbar eine Steigerung der Verdampfungsrate und ein Ansteigen des Innendrucks im Destillationsgefäss 3 bedeutet. Somit stellt sich bei konstanter Temperatur das beschriebene Gleichgewicht zwischen Verdampfungs- und Kondensationsrate ein. Da während des Destillationsvorgangs der Hahn 14 geschlossen bleibt, ist die Gesamtanordnung 6 gegenüber der Umgebung vollständig gasdicht, womit keinerlei Lösungsmitteldampf entweichen kann. Die Anlage ist demnach emissionsfrei.

Das im Kondensator 4 anfallende Kondensat wird im Sammelgefäss 5 aufgefangen, bis die Destillation abgeschlossen ist. Danach kann die Gesamtanordnung 6 durch den Hahn 14 oder den Hahn 12 belüftet weren, um das destillierte Kondensat aus dem Sammelgefäss 5 zu entleeren und einen neuen Destillationsvorgang vorzubereiten.

Ersichtlicherweise kann zur Steuerung oder Regelung des Ablaufs die von der Heizeinrichtung 2 an das Destillationsgefäss 3 bzw. das zu destillierende Lösungsmittel abgegebene Wärmeenergie geregelt werden. Auch die Kühlleistung des Kondensators 4 lässt sich in bekannter Weise steuern oder regeln, um die Anordnung an verschiedene Lösungsmittel anzupassen oder den Verfahrensablauf zu optimieren.

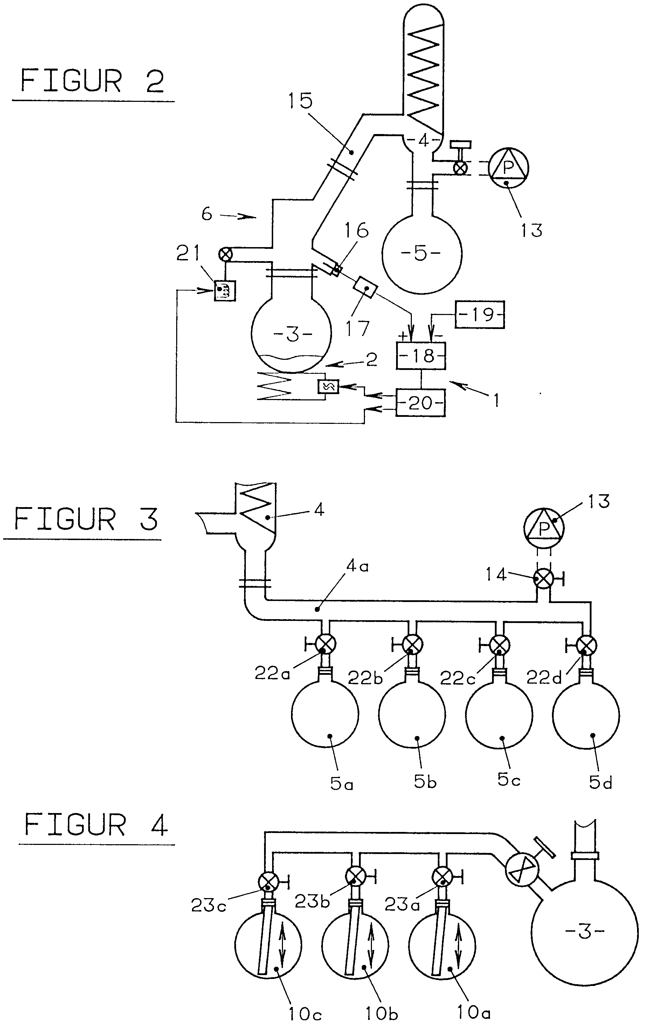

Figur 2 zeigt ein Beispiel einer derartigen Regelung: dazu ist in der Rohr-Leitung 15 ein Fühler 16 einer Vakuum-Sensoreinrichtung 17 vorgesehen. Das Ausgangssignal der Vakuum-Sensoreinrichtung 17 wird an den einen Eingang eines Vergleichers 18 abgegeben, an dessen anderem Eingang ein Sollwertgeber 19 angeschlossen ist. Das Ausgangssignal des Vergleichers 18 entspricht der Regelabweichung; es wird an den Eingang des einen Reglers 20 gelegt. Ausgangsseitig ist der Regler 20 mit der Heizeinrichtung 2 verbunden, deren Temperatur er regelt. Sobald die Vakuum-Sensoreinrichtung 17 einen Innendruck ermittelt, der über einem am Sollwertgeber 19 einstellbaren Sollwert liegt, wird durch den Regler 20 die Temperatur und damit die Energieabgabe der Heizeinrichtung 2 gesenkt. Dies tritt z. B. ein, wenn die Temperatur des Heizbads 9 für das zu verdampfende Lösungsmittel bei Beginn der Destillation zu hoch war. Damit wird die Verdampfungsrate gesenkt, womit der Druck im System absinkt. Auf diese Weise kann einerseits ein unerwünschter und gegebenenfalls gefährlicher Druckanstieg in der Gesamtanordnung 6 verhindert werden. Andererseits lässt sich die Gesamtanordnung 6 auf diese Weise einfach an verschiedene Lösungsmittel mit stark unterschiedlichen Verdampfungsraten vollautomatisch anpassen. Vor allem wird dadurch bereits bei Beginn eines Destillationsvorgangs die Temperatur der Heizeinrichtung 2 automatisch abgesenkt oder erhöht, wenn z. B. versehentlich ein zu hoher oder ein zu niederer Temperaturwert eingestellt wurde.

Der Regler 20 ist ausgangsseitig ausserdem mit einem Sicherheitsventil 21 verbunden. Sofern durch den Fühler 16 und die Vakuum-Sensoreinrichtung 17 ein Innendruck ermittelt, der den Umgebungsdruck geringfügig überschreitet, wird die ermittelte Regelabweichung so gross, dass der Regler 20 das Sicherheitsventil 21 aktiviert und damit das Gesamtsystem öffnet. Gleichzeitig wird die Heizeinrichtung 20 abgeschaltet. Auf diese Weise wird sichergestellt, dass nicht durch einen zu starken Anstieg des Drucks im System Berstgefahr entsteht. Dies ist vor allem deshalb wichtig, weil die Gesamtanordnung aus Destillationsgefäss 3, Kondensator 4 und Sammelgefäss 5 bei Laboranlagen in der Regel aus Glas besteht und damit bei Ueberdruck erhebliche Gefährdung entstehen kann.

Figur 3 zeigt ein Ausführungsbeispiel, bei dem am Ausgang des Kondensators 4 eine Mehrzahl von Sammelgefässen 5a, 5b, 5c und 5d vorgesehen sind. Die Sammelgefässe 5a bis 5d sind durch Hähne 22a, 22b, 22c und 22d mit einer Auslass-Leitung 4a des Kondensators 4 verbunden. Analog dem Ausführungsbeispiel gemäss Figur 1 oder 2 können die Hähne 22a, 22b, 22c und 22d beim Evakuieren der Gesamtanordnung geöffnet werden, so dass sich in den Sammelgefässen 5a bis 5d ebenfalls ein Vakuum einstellt. Nach dem Evakuieren können z. B. für einen ersten Destillationsvorgang die Hähne 22b, 22c und 22d geschlossen werden, womit das vom Kondensator 4 gelieferte Kondensat im ersten Sammelgefäss 5a aufgefangen wird. Sobald das Sammelgefäss 5a gefüllt ist, kann der Hahn 22a geschlossen und der Hahn 22b geöffnet werden. Danach lässt sich das Sammelgefäss 5a entfernen und der Destillationsvorgang kann mit dem Sammelgefäss 5b und anschliessend in gleicher Weise mit den Sammelgefässen 5c und 5d weitergeführt werden.

Figur 4 zeigt einen Ausschnitt aus einer Anordnung mit einer Mehrzahl von Zufuhr-Behältern 10a, 10b und 10c. Die Behälter 10 sind mittels Hähnen 23a, 23b und 23c über Leitung 11 und Hahn 12 mit dem Destillationsgefäss 3 verbunden.

Zur Durchführung der Destillation können analog dem Ausführungsbeispiel gemäss Figur 1 zum Entleeren der Behälter 10a, 10b und 10c sequentiell die Hähne 23a, 23b und 23c geöffnet werden. Dabei kann z. B. der Inhalt jedes der Behälter 10a bis 10c in einem separaten, aber quasi-kontinuierlichen Destillationsvorgang dazu benutzt werden, um ein separates Sammelgefäss 5a, 5b, 5c, 5d (Figur 3) zu füllen.

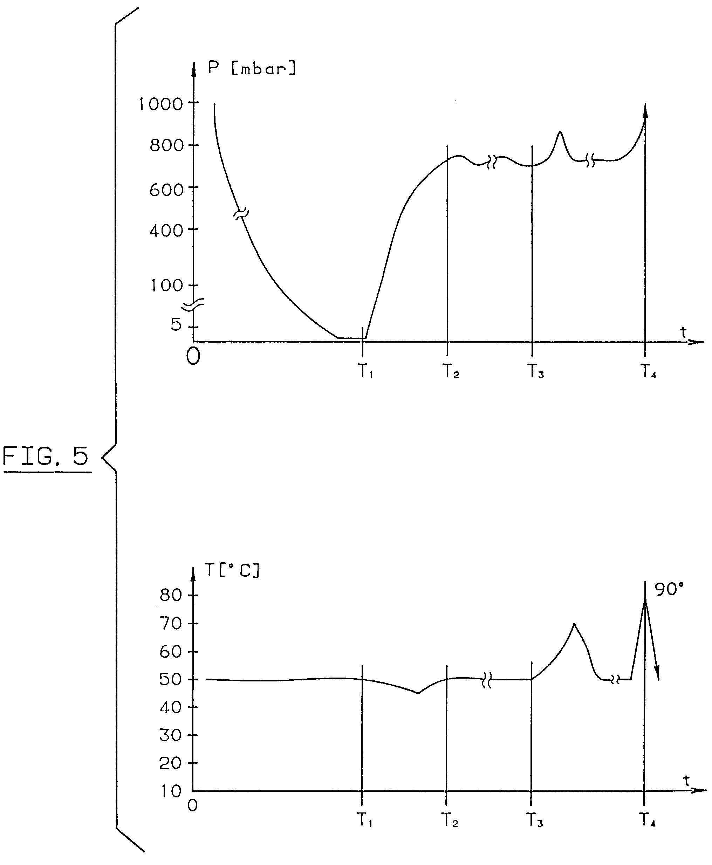

Figur 5 zeigt den Verlauf des System-Drucks und der Temperatur des Heizbads 9 beim Betrieb einer Destillationsvorrichtung 1 gemäss Figur 1 oder 2. Zunächst wird der Druck in der Gesamtanordnung 6 abgesenkt, bis der Innendruck zum Zeitpunkt T₁ einen Wert von etwa einem mbar erreicht hat. Die Temperatur der Heizeinrichtung 2 bzw. im Heizbad 9 beträgt 50 °C. Zum Zeitpunkt T₁ wird zu destilierende Flüssigkeit in das Destillationsgefäss 3 eingelassen. Sofort steigt der Druck im System bzw. in der Gesamtanordnung 6 auf etwa 700 mbar an. Gleichzeitig sinkt die Temperatur im Heizbad 9 bzw. an der Heizeinrichtung 2 kurzfristig ab, bis durch weitere Energiezufuhr beim Zeitpunkt T₂ etwa Gleichgewicht erreicht ist. Danach verläuft der Druckverlauf durch die vorstehend beschriebene Selbstregulierung etwa konstant bis zum Zeitpunkt T₃. Zum Zeitpunkt T₃ tritt aufgrund einer (angenommenen) Störung oder Fehlmanipulation der Heizeinrichtung 2 ein starker Temperaturanstieg auf. Dies bewirkt einen Anstieg des Innendruckes. Dieser Druckanstieg wird von der Vakuum-Sensoreinrichtung 17 (Figur 2) ermittelt, und aufgrund der Regelabweichung reduziert der Regler 20 die Temperatur.

Ein beim Zeitpunkt T₄ angenommener Störfall führt zu einer extremen Temperaturerhöhung. Der Druck im System überschreitet den Aussenwert. Der Druckanstieg wird wiederum von der Vakuum-Sensoreinrichtung 17 ermittelt und der Regler 20 öffnet das Sicherheitsventil 21, wie im Zusammenhang mit Figur 2 beschrieben.

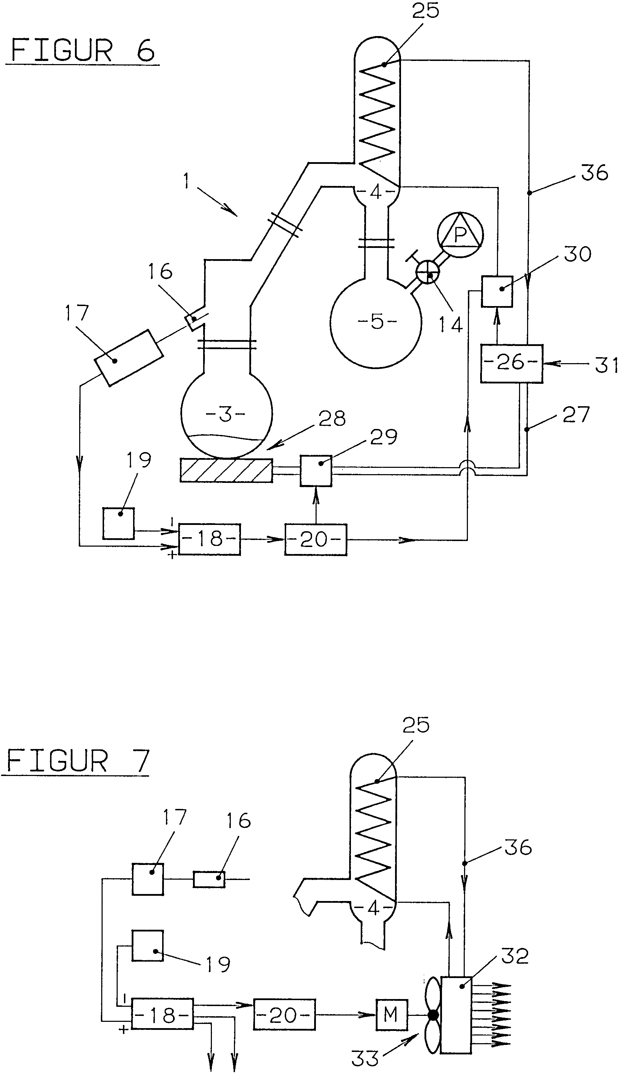

Figur 6 zeigt ein Ausführungsbeispiel mit Wärmerückgewinnung. Figur 2 entsprechende Teile sind mit gleichen Bezugszeichen versehen.

Beim Ausführungsbeispiel gemäss Figur 6 verläuft durch den Kondensator 4 eine Kühlschlange 25, die mit einer Wärmepumpe 26 verbunden ist. Dem durch die Kühlschlange 25 zirkulierenden Medium wird in der Wärmepumpe 26 Wärmeenergie entzogen und die Temperatur des Mediums wird gleichzeitig abgesenkt. Die entzogene Wärmeenergie wird dazu verwendet, ein Heizmedium zu erwärmen, das durch eine Leitung 27 der Heizeinrichtung 28 zugeführt wird, um das Destillationsgefäss 3 bzw. das darin befindliche Destillat zu erwärmen. Analog Figur 2 wird durch Fühler 16 und Vakuum-Sensoreinrichtung 17 der System-Druck ermittelt. Beim Abweichen von einer Sollwert-Kurve, die durch den Sollwertgeber 19 vorgegeben wird, gibt der Regler 20 entsprechende Stellsignale an ein erstes Stellglied 29 ab, welches die der Heizeinrichtung 28 zugeführte Energiemenge steuert. Ausserdem wird vom Regler 20 ein zweites Stellsignal an ein zweites Stellglied 30 abgegeben, das die dem Kondensator 4 zugeführte Menge an Kühlflüssigkeit steuert. Dabei wird durch eine Leitung 31 der Wärmepumpe 26 ausreichend Fremdenergie zugeführt, um Kühlleistung und/oder Heizleistung entsprechend den Systemanforderungen erhöhen zu können.

Dementsprechend kann der Regler 20 z. B. beim Ansteigen des Drucks im System zunächst durch Betätigung des Stellglieds 30 die Kühlleistung und damit die Kondensationsrate erhöhen. Steigt der Druck weiter an, kann mittels des Stellglieds 29 die Heizleistung reduziert werden. Die Anordnung lässt sich dabei beliebig an die verschiedensten Lösungsmittel und die verschiedensten Verdampfungsabläufe automatisch anpassen. Alternativ lässt sich auch direkt in die Wärmepumpe 26 eingreifen, um Kühl- oder Heiztemperatur zu beeinflussen.

Figur 7 zeigt ein abgewandeltes Ausführungsbeispiel, bei welchem die Kühlschlange 25 des Kondensators 4 mit einem Durchlauf-Kühler 32 verbunden ist. Der Kühler 32 weist eine nicht dargestellte Lamellen-Anordnung auf. Mittels eines Ventilators 33 wird die Umgebungsluft durch den Kühler 32 geblasen, so dass die durch die Kühlschlange 25 zirkulierende Kühlflüssigkeit durch Umgebungsluft abgekühlt wird. Analog dem Ausführungsbeispiel gemäss Figur 2 und 6 können Druckschwankungen in der Gesamtanordnung, die durch Fühler 16 und Vakuum-Sensoreinrichtung 17 ermittelt werden, die Systemparameter verändern. Beim Ausführungsbeispiel gemäss Figur 7 geschieht dies dadurch, dass die Drehzahl des Ventilators 33 erhöht wird, um dadurch die Kühlleistung zu erhöhen und die Kondensationsrate ansteigen zu lassen. Gleichzeitig oder alternativ kann der Regler 20 analog Figur 2 oder 3 über Leitungen 34 auf andere Systemparameter (z. B. Sicherheitsventil oder Energiezufuhr zum Destillationsgefäss) einwirken. Damit lässt sich der Destillationsprozess für die verschiedensten Lösungsmittel vollautomatisch durchführen und gleichzeitig wird die Anlage gegen Ueberdruck gesichert.

## Patentansprüche

1. Verfahren zum Destillieren von Flüssigkeiten, insbesondere von Lösungsmitteln, mit einem Destillationsgefäss (3), dessen Auslassöffnung mit einem Kondensator (4) verbunden ist, sowie mit wenigstens einem Sammelgefäss (5, 5a, 5b, 5c, 5d) zum Aufnehmen des Kondensats, wobei Destillationsgefäss (3), Kondensator (4) und Sammelgefäss (5) zu einer Gesamtanordnung (6) verbindbar sind, wobei der Innendruck in der Gesamtanordnung (6) gegenüber dem Umgebungsdruck abgesenkt wird,
dadurch gekennzeichnet,
- dass die Gesamtanordnung (6) vor dem Beginn der Verdampfung der Flüssigkeit im Destillationsgefäss (3) geschlossen wird und während des ganzen Verdampfungsvorgangs geschlossen bleibt,
- und dass die Verdampfung der Flüssigkeit durch Zuführung von Wärmeenergie, ohne weiterlaufende Druckabsenkung der Gesamtanordnung (6), gesteuert oder geregelt wird.

2. Verfahren nach Anspruch 1, dadurch gekennzeichnet, dass der Innendruck laufend überwacht und mit wenigstens einem Sollwert verglichen wird, dass beim positiven Abweichen von einem Sollwert (höherer Druck als vorgesehen) die Wärmezufuhr zur destillierenden Flüssigkeit reduziert und beim negativen Abweichen von einem Sollwert (geringerer Druck) die Wärmezufuhr erhöht wird und/oder dass beim Annähern des Innendrucks an den Aussendruck über einen Grenzwert hinaus die Wärmezufuhr zur Flüssigkeit unterbrochen und/oder ein Sicherheitsventil (21) zum Abbau der Differenz von Innendruck und Aussendruck geöffnet wird.

3. Verfahren nach Anspruch 1 oder 2, dadurch gekennzeichnet, dass die Kühlleistung des Kondensators (4) in Abhängigkeit vom Innendruck geregelt wird.

4. Verfahren nach einem der vorangegangenen Ansprüche, dadurch gekennzeichnet, dass die dem Kondensator (4) entzogene Wärmeenergie der zu destillierenden Flüssigkeit wenigstens teilweise zugeführt wird.

5. Verfahren nach einem der vorangegangenen Ansprüche, dadurch gekennzeichnet, dass das Kondensat sequentiell einer Anzahl von Sammelgefässen (5a, 5b, 5c, 5d) zugeführt wird.

6. Verfahren nach einem der vorangegangenen Ansprüche, wobei die Gesamtanordnung wenigstens einen durch einen Hahn (12, 14, 22a, 22b, 22c, 23a, 23b, 23c) von der Gesamtanordnung trennbaren bzw. mit der Gesamtanordnung verbindbaren Behälter (10a, 10b, 10c, 5a, 5b, 5c, 5d) aufweist, in dem der Innendruck gegenüber dem Aussendruck absenkbar ist, dadurch gekennzeichnet, dass der Hahn nach dem Einsetzen der Destillation geöffnet wird.

7. Verfahren nach Anspruch 6, dadurch gekennzeichnet, dass das Destillationsgefäss (3) sequentiell mit mehreren Zufuhr-Behältern (10a, 10b, 10c) verbunden wird.

8. Vorrichtung zum Destillieren von Flüssigkeiten, insbesondere Lösungsmitteln, mit einem Destillationsgefäss (3), dessen Auslassöffnung mit einem Kondensator (4) verbunden ist, dem seinerseits ein Sammelgefäss (5, 5a, 5b, 5c, 5d) nachgeschaltet ist, wobei die Gesamtanordnung (6) aus Destillationsgefäss (3), Kondensator (4) und Sammelgefäss (5, 5a, 5b, 5c, 5d) an eine Vakuumpumpe (13) zum Absenken des Innendrucks in der Gesamtanordnung gegenüber dem Aussendruck angeschlossen ist, dadurch gekennzeichnet, dass zwischen Vakuumpumpe (13) und Gesamtanordnung (6) ein Hahn (14) angeordnet ist, um die Evakuierung vor oder nach dem Einsetzen der Destillation bis zur Beendigung der Destillation andauernd zu unterbrechen und die Gesamtanordnung (6) gegenüber der Umgebung gasdicht zu halten.

9. Vorrichtung nach Anspruch 8, dadurch gekennzeichnet, dass eine Heizeinrichtung (2) zum Zuführen von Wärmeenergie zum Destillationsgefäss (3) vorgesehen ist.

10. Vorrichtung nach Anspruch 8 oder 9, dadurch gekennzeichnet, dass ein Regler (20) zum laufenden Ueberwachen des Innendrucks im Destillationsgefäss (3) und zum Vergleich mit wenigstens einem Sollwert vorgesehen ist, dass der Regler in Wirkverbindung mit der Heizeinrichtung (2) steht, um die Wärmezufuhr bei positiver Abweichung (höherer Druck als vorgegeben) zu reduzieren und bei negativer Abweichung (geringerer Druck als vorgegeben) zu erhöhen.

11. Vorrichtung nach Anspruch 10, dadurch gekennzeichnet, dass der Regler (20) in Wirkverbindung mit einem Sicherheitsventil (21) steht, durch welches das Destillationsgefäss (3) bei Erreichen eines Maximaldrucks, insbesondere bei Annäherung an den Aussendruck, belüftbar ist.

12. Vorrichtung nach einem der Ansprüche 8 bis 11, dadurch gekennzeichnet, dass der Kondensator (4) eine Leitungsanordnung (36) zur Zufuhr und Abfuhr von Kühlflüssigkeit aufweist, dass die Leitungsanordnung (36) mit einem Kühler (32, 36) zum Kühlen der zirkulierenden Kühlflüssigkeit verbunden ist.

13. Verwendung einer evakuierten und gegen die Umgebungsluft gasdicht geschlossenen Gesamtanordnung (6) aus Destillationsgefäss (3) und Kondensator (4) zum Destillieren von Lösungsmitteln.

14. Verwendung nach Anspruch 13, mit einem Regler (20) zum Regeln der Energiezufuhr zum Destillationsgefäss (3).
